# EUROPEAN PATENT APPLICATION

(11) **EP 2 497 914 A1**
(43) Date of publication of application: **12.09.2012**
(21) Application number: 10828190.8
(22) Date of filing: 19.10.2010
(51) Int. Cl.: F01L 1/04, F02F 1/24, F16C 17/02, F16C 19/28, F16C 19/49, F16C 33/58

(54) **CAMSHAFT APPARATUS**

(30) Priority: 04.11.2009 JP 2009253123
(71) Applicant: JTEKT Corporation, Osaka-shi, Osaka 542-8502 (JP)
(72) Inventor: HAMADA Kazuki, Osaka-shi Osaka 542-8502 (JP); UENO Hiroshi, Osaka-shi Osaka 542-8502 (JP); USUKI Isao, Osaka-shi Osaka 542-8502 (JP); HIRAOKA Hironori, Osaka-shi Osaka 542-8502 (JP); YAMASHITA Kotaro, Osaka-shi Osaka 542-8502 (JP); SATOU Hiroshi, Osaka-shi Osaka 542-8502 (JP); IKEDA Takaaki, Osaka-shi Osaka 542-8502 (JP); OONISHI Ryo, Osaka-shi Osaka 542-8502 (JP)
(74) Representative: Winter, Brandl, Fürniss, Hübner, Röss, Kaiser, Polte - Partnerschaft
(86) International application number: PCT/JP2010/068350
(87) International publication number: WO 2011/055630

(57) **Abstract**

Among a plurality of bearings that rotatably support a camshaft (1), the bearing closest to a pulley (P) is a rolling bearing (4), and the other bearings are plain bearings (3). The rolling bearing (4) is formed of a roller bearing portion (5) that has a first outer ring raceway surface (51) and a plurality of cylindrical rollers (53) that roll on the first outer ring raceway surface (51) and a ball bearing portion (6) that is arranged next to the roller bearing portion (5) in an axial direction and that has a second outer ring raceway surface (61) and a plurality of balls (63) that roll on the second outer ring raceway surface (61). The first outer ring raceway surface (51) and the second outer ring raceway surface (61) are formed on the inner peripheral surface (7a) of a single outer ring (7).

## Description

### TECHNICAL FIELD

The invention relates to a camshaft apparatus that is driven for rotation in synchronization with the rotation of an engine.

### BACKGROUND ART

An existing camshaft apparatus used in an engine for an automobile rotatably supports a camshaft having a plurality of cams for actuating intake and exhaust valves via a plurality of bearings (for example, see Patent Document 1). As shown in FIG. 3, in the support structure, all the bearings are plain bearings 41, and the plain bearings 41 are used to respectively support portions between the cams 43 of the camshaft 42.

The existing camshaft apparatus that uses the plain bearings for all the bearings has a large friction resistance because the plain bearings are used, so there is a problem that the running torque of the camshaft increases and the fuel economy performance of the engine decreases. In order to solve the above problem, there is proposed that rolling bearings are used for all the bearings (for example, see Patent Document 2).

### RELATED ART DOCUMENT

### PATENT DOCUMENT

Patent Document 1: Japanese Patent Application Publication No. 8-218817
Patent Document 2: Japanese Patent Application Publication No. 2006-226183

### SUMMARY OF THE INVENTION

### PROBLEMS TO BE SOLVED BY THE INVENTION

In the camshaft apparatus in which all the bearings that support the camshaft are rolling bearings, when coaxiality is low at the time of assembling the rolling bearings to an engine-side cylinder head, or the like, the camshaft cannot smoothly rotate, so it is necessary to set the coaxiality among the rolling bearings so as to be high. Therefore, it is necessary to increase the machining accuracy of assembled portions of the cylinder head, or the like, so there is a problem that it is difficult to manufacture the assembled portions. One of objects of the invention is contemplated in light of the above situation, and is to provide a camshaft apparatus that is able to reduce the running torque of the camshaft and that is able to easily manufacture the assembled portions to which the bearings that support the camshaft are assembled.

### MEANS FOR SOLVING THE PROBLEMS

A camshaft apparatus according to one aspect of the invention includes: a camshaft having a plurality of cams in an axial direction and one end to which a pulley is connected; and a plurality of bearings that rotatably support the camshaft on a housing, wherein, among the plurality of bearings, the bearing closest to the pulley is formed of a rolling bearing, and the other bearing is formed of a plain bearing, the rolling bearing includes: a roller bearing portion that has a first outer ring raceway surface and a plurality of rollers that roll on the first outer ring raceway surface; and a ball bearing portion that is arranged next to the roller bearing portion in the axial direction and that has a second outer ring raceway surface and a plurality of balls that roll on the second outer ring raceway surface, and the first outer ring raceway surface and the second outer ring raceway surface are formed on an inner periphery of a single outer ring.

### BRIEF DESCRIPTION OF THE DRAWINGS

[FIG. 1] FIG. 1 is a partially sectional view that shows a camshaft apparatus according to an embodiment of the invention.
[FIG. 2] FIG. 2 is an enlarged sectional view that shows a relevant portion of FIG. 1.

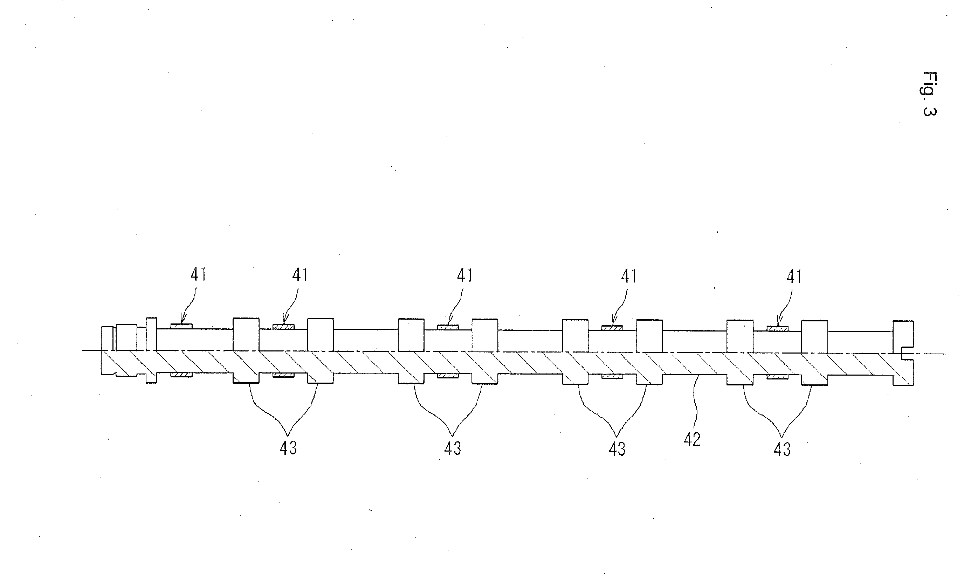

[FIG. 3] FIG. 3 is a sectional view that shows an existing camshaft apparatus.

### EMBODIMENTS OF THE INVENTION

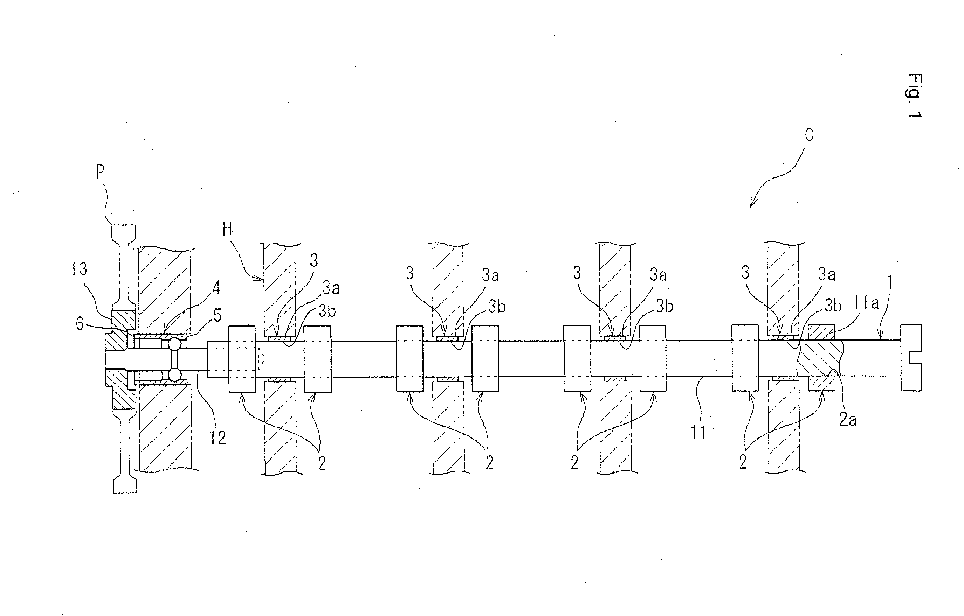

Hereinafter, an embodiment of the invention will be described with reference to the accompanying drawings. FIG. 1 is a partially sectional view that shows a camshaft apparatus according to the embodiment of the invention. The camshaft apparatus C is to actuate the intake and exhaust valves of an automobile engine, and is assembled to a housing H (cylinder head) formed of an aluminum block. The camshaft apparatus C includes a camshaft 1 having a plurality of cams 2, a plurality of (four in the present embodiment) plain bearings 3 that rotatably support the camshaft 1 and a single rolling bearing 4.

The camshaft 1 has a linear shaft body 11, a shaft member 12 connected to one end (right side in FIG. 1) of the shaft body 11 and the plurality of substantially egg-shaped cams 2 that are fitted around the outer periphery of the shaft body 11. The shaft member 12 has an outside diameter that is set to, for example, 18 to 20 mm, and is fixedly press-fitted to one end of the shaft body 11 concentrically. A pulley P for rotating the camshaft 1 is connected to an end of the shaft member 12 via a pulley mounting portion 13. Then, the pulley P is coupled to a crankshaft (not shown) that serves as an output shaft via a belt (not shown), and rotates in synchronization with the crankshaft. Power is transmitted to the camshaft 1 via the pulley P.

The cams 2 are arranged in units of pair at predetermined intervals along the axial direction of the shaft body 11. A through hole 2a for press-fitting the cam 2 to the outer peripheral surface 11a of the shaft body 11 is formed in each cam 2.

Each plain bearing 3 is arranged between a corresponding one of pairs of the cams 2, and rotatably supports the shaft body 11. Each plain bearing 3 is formed in a cylindrical shape, and its outer peripheral surface 3a is fixedly fitted to an accommodating chamber inner surface of a housing H. In addition, the outer peripheral surface 11a of the shaft body 11 is in sliding contact with the inner peripheral surface 3b of each plain bearing 3 via an oil film.

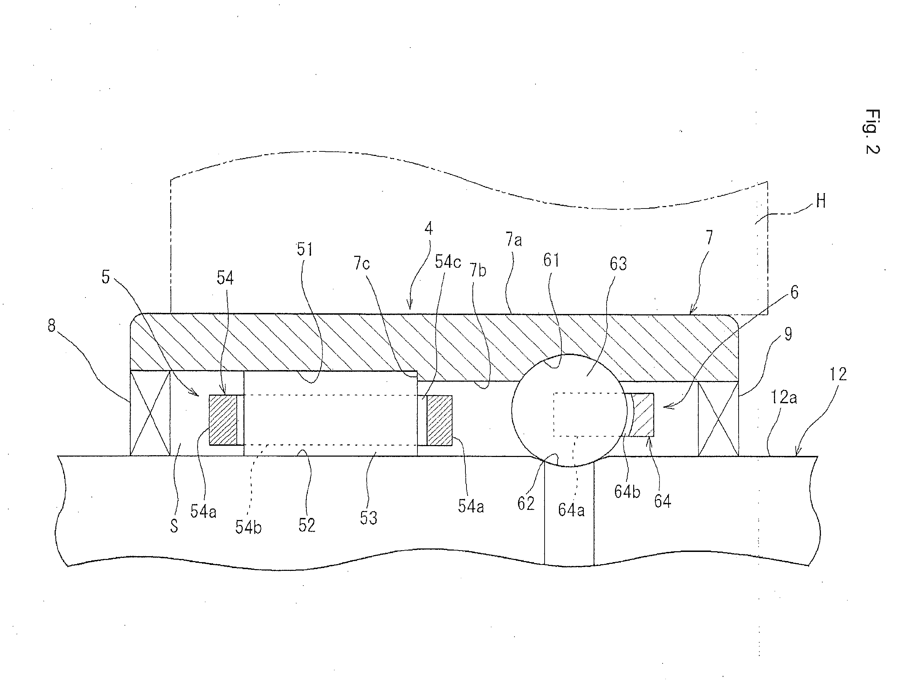

The rolling bearing 4 is a bearing closest to the pulley P, and rotatably supports the shaft member 12 of the camshaft 1. FIG. 2 is an enlarged view of a relevant portion of FIG. 1, showing the rolling bearing 4. The rolling bearing 4 has a single outer ring 7, and is formed such that a roller bearing portion 5 and a ball bearing portion 6 are separated in the axial direction. The outer ring 7 is formed of, for example, a bearing steel, a stainless alloy, or the like, in a cylindrical shape, and its outer peripheral surface 7a is fixedly fitted to the accommodating chamber inner surface of the housing H.

The roller bearing portion 5 includes a first outer ring raceway surface 51 formed on the outer ring 7, a first inner ring raceway surface 52 formed on the shaft member 12, a plurality of cylindrical rollers 53 rollably arranged between the first outer ring raceway surface 51 and the first inner ring raceway surface 52 and a first cage 54 that retains the cylindrical rollers 53 at predetermined intervals along the circumferential direction to thereby form a cylindrical roller bearing.

The first outer ring raceway surface 51 is integrally formed with a step 7c formed at one end side (left side in FIG. 2) from substantially the center portion of the inner peripheral surface 7b of the outer ring 7. The first inner ring raceway surface 52 is integrally formed with the outer peripheral surface 12a of the shaft member 12. The outer peripheral surface 12a faces the first outer ring raceway surface 51. The cylindrical rollers 53 are, for example, formed of a bearing steel, a stainless alloy, or the like. Displacement of the cylindrical rollers 53 toward one side (right side in FIG. 2) in the axial direction is restricted by the step 7c. The first cage 54 has a pair of annular portions 54a that are arranged so as to be spaced apart in the axial direction and a plurality of pillar portions 54b that couple the pair of annular portions 54a. A plurality of pockets 54c are formed in the circumferential direction by the space between any adjacent pillar portions 54b and the pair of annular portions 54a. Each cylindrical roller 53 is arranged in the corresponding pocket 54c, and the cylindrical rollers 53 are retained at predetermined intervals along the circumferential direction.

The ball bearing portion 6 is arranged next to the roller bearing portion 5 on the side adjacent to the shaft body 11 in the axial direction. In addition, the ball bearing portion 6 includes a second outer ring raceway surface 61 formed on the outer ring 7, a second inner ring raceway surface 62 formed on the shaft member 12, a plurality of balls 63 rollably arranged between the second outer ring raceway surface 61 and the second inner ring raceway surface 62 and a second cage 64 that retains the balls 63 at predetermined intervals along the circumferential direction to thereby form a deep groove ball bearing.

The second outer ring raceway surface 61 is formed in a circular arc shape in cross section at the other end (right side in FIG. 2) from substantially the center portion of the inner peripheral surface 7b of the outer ring 7. The second inner ring raceway surface 62 is formed in a circular arc in cross section on the outer peripheral surface 12a of the shaft member 12. The outer peripheral surface 12a faces the second outer ring raceway surface 61. The balls 63 are, for example, formed of a bearing steel, a stainless alloy, or the like. The second cage 64 is a snap cage that is molded by resin, and a plurality of pockets 64b for accommodating the balls 63 are formed in the circumferential direction by a plurality of pillar portions 64a that extend in the axial direction.

Incidentally, particularly, a portion adjacent to the pulley P to which power is transmitted within the camshaft 1 receives a large load applied because of belt tension. The applied loading occupies about 70% of the entire applied loading that acts on the whole of the camshaft 1. Therefore, in the rolling bearing 4, the roller bearing portion 5 that has a loading capacity of about three times as large as that of the ball bearing portion 6 is arranged close to the pulley P. By so doing, a portion having a large applied loading within the camshaft 1 may be stably supported by the roller bearing portion 5 having a large loading capacity. In addition, displacement of the camshaft 1 toward both sides in the axial direction is restricted by the ball bearing portion 6.

The rolling bearing 4 further includes seal members 8 and 9 for hermetically sealing the gaps between the outer ring 7 and the shaft member 12. The seal members 8 and 9 are mainly formed of an elastic body, such as synthetic rubber, and are respectively fitted to both axial ends of the inner peripheral surface 7b of the outer ring 7. Grease (not shown) is filled in the space S that is hermetically sealed by the seal members 8 and 9. By so doing, it is possible to reliably lubricate the roller bearing portion 5 and the ball bearing portion 6 by the grease filled in the space S while preventing foreign matter, such as carbon sludge and metal powder, contained in lubricating oil of an engine from entering the space S. In addition, it is possible to reduce noise generated from the roller bearing portion 5 and the ball bearing portion 6 by the grease filled in the space S.

With the thus configured camshaft apparatus C according to the present embodiment, the bearing closest to the pulley P is the rolling bearing 4 among the plurality of bearings that support the camshaft 1, so the maximum applied load that acts via the pulley P within the camshaft 1 may be supported by the rolling bearing 4 having a small friction resistance. Thus, it is possible to effectively reduce the running torque of the camshaft 1. In addition, the other bearings that support the camshaft 1 are the plain bearings 3, so, in comparison with the case where all are rolling bearings as in the case of the existing art, it is possible to set the coaxiality among the bearings so as to be low. This is because, when the plain bearings 3 are used as bearings that support the camshaft 1, a slight gap is formed between the outer peripheral surface 3a of each plain bearing 3 and the housing H, so, even when the coaxiality among the bearings is decreased, the camshaft 1 may be rotated without any trouble. As a result, it is not necessary to increase the machining accuracy of the assembled portions (housing H) to which the bearings that support the camshaft 1 are assembled, so it is possible to easily manufacture the assembled portions. In addition, the rolling bearing 4 is provided for the shaft member 12 at the end of the camshaft 1, so the rolling bearing 4 may be applied to a camshaft that is cast integrally from the cams 2 and the shaft body 11 other than the assembly-type camshaft 1 in which the cams 2 are externally fitted around the shaft body 11.

Furthermore, the rolling bearing 4 has the roller bearing portion 5 and the ball bearing portion 6, so the loading capacity may be increased by the roller bearing portion 5, and displacement of the camshaft 1 in the axial direction may be restricted by the ball bearing portion 6. Therefore, it is possible to suppress a decrease in the operating performance of the camshaft apparatus C due to the above applied load. In addition, the first outer ring raceway surface 51 of the roller bearing portion 5 and the second outer ring raceway surface 61 of the ball bearing portion 6 are formed of the inner peripheral surface 7b of the single outer ring 7, so the number of components may be reduced, and manufacturing cost may be reduced.

In addition, the first inner ring raceway surface 52 on which the cylindrical rollers 53 of the roller bearing portion 5 roll and the second inner ring raceway surface 62 on which the balls 63 of the ball bearing portion 6 roll are formed on the outer peripheral surface 12a of the shaft member 12 of the camshaft 1, so the camshaft 1 may be used as both the inner rings of the roller bearing portion 5 and ball bearing portion 6. Thus, the number of components may be reduced, and manufacturing cost may be further reduced. In addition, the first and second inner ring raceway surfaces 52 and 53 may be formed on the shaft member 12 before the shaft member 12 is connected to the shaft body 11, so machining the inner ring raceway surfaces 52 and 53 is easy.

The invention is not limited to the above described embodiment, but it may be modified in design where appropriate. For example, in the above embodiment, the camshaft 1 is formed such that the shaft body 11 is separately formed from the cams 2; instead, as described above, the camshaft 1 may be integrally formed by casting from the shaft body 11 and the cams 2. In addition, the roller bearing portion 5 may be formed as a needle bearing other than a cylindrical roller bearing. Furthermore, the ball bearing portion 6 may be formed as an angular contact ball bearing when mounting space may be ensured, other than a deep groove ball bearing. In addition, the inner ring raceway surface 52 of the roller bearing portion 5 and the inner ring raceway surface 62 of the ball bearing portion 6 are formed on the outer peripheral surface 12a of the shaft member 12; instead, the inner ring raceway surface 52 of the roller bearing portion 5 and the inner ring raceway surface 62 of the ball bearing portion 6 may be formed on the outer peripheral surface of an inner ring separately mounted on the shaft member 12.

### DESCRIPTION OF REFERENCE NUMERALS

1 camshaft
2 cam
3 plain bearing (bearing)
4 rolling bearing (bearing)
5 roller bearing portion
6 ball bearing portion
7 outer ring
11 shaft body
12 shaft member
51 first outer ring raceway surface
52 first inner ring raceway surface
53 cylindrical roller (roller)
61 second outer ring raceway surface
62 second inner ring raceway surface
63 ball
C camshaft apparatus
H housing
P pulley

## Claims

1. A camshaft apparatus that includes: a camshaft having a plurality of cams at predetermined intervals along an axial direction and one end to which a pulley is connected; and a plurality of bearings that rotatably support the camshaft on a housing, **characterized in that**:
the bearing closest to the pulley among the plurality of bearings is formed of a rolling bearing, and the other bearing is formed of a plain bearing,
the rolling bearing includes: a roller bearing portion that has a first outer ring raceway surface and a plurality of rollers that roll on the first outer ring raceway surface; and a ball bearing portion that is arranged next to the roller bearing portion in the axial direction and that has a second outer ring raceway surface and a plurality of balls that roll on the second outer ring raceway surface, and
the first outer ring raceway surface and the second outer ring raceway surface are formed on an inner periphery of a single outer ring.

2. The camshaft apparatus according to claim 1, wherein a first inner ring raceway surface on which the rollers of the roller bearing portion roll and a second inner ring raceway surface on which the balls of the ball bearing portion roll are formed on an outer peripheral surface of the camshaft.

3. The camshaft apparatus according to claim 2, wherein
the camshaft includes a shaft body and a shaft member that is concentrically connected to one end of the shaft body and to which the pulley is connected, and
the first inner ring raceway surface and the second inner ring raceway surface are formed on an outer peripheral surface of the shaft member.
